# EUROPEAN PATENT APPLICATION

(11) **EP 1 287 751 A2**
(43) Date of publication of application: **05.03.2003**
(21) Application number: 02018219.2
(22) Date of filing: 20.08.2002
(51) Int. Cl.: A23L 3/10

(54) **Pressure heating method and pressure heating apparatus**

(30) Priority: 31.08.2001 JP 2001262733
(71) Applicant: Takano, Motoharu, Tokyo (JP); Altech Co. Ltd, Tokyo (JP)
(72) Inventor: Takano, Motoharu, Tokyo (JP)
(74) Representative: Grünecker, Kinkeldey, Stockmair & Schwanhäusser Anwaltssozietät

(57) **Abstract**

Disclosed are a pressure heating method and a pressure heating apparatus which can prevent deformation of articles or deterioration of the quality of the articles due to supply of excessive pressure and heat. After performing pressurizing and heating processing of articles by supplying steam to a pressure vessel, the supply of steam is stopped and air is supplied to the pressure vessel to keep the internal pressure of the pressure vessel within the range not exceeding the maximum value of the internal pressure at the time of pressurizing and heating. A cooling water spray device on a circulation pipe is operated along with a turbo blower so as to condense it for gradual removal. After completing the removal of the steam, the articles are cooled by the operation of the cooling water jet unit. By avoiding an abrupt decrease in the pressure inside the pressure vessel through preventing an instant condensation of the whole steam, an excessive pre-load becomes unnecessary at the final stage of sterilization. Therefore, deformation of the articles such as canned foods and deterioration of the quality of the articles due to the temperature increase caused by the preload can be avoided.

## Description

### BACKGROUND OF THE INVENTION

### 1. Field of the Invention

Present invention relates to improvements in pressure heating methods and pressure heating apparatuses which are preferably used for sterilization of foods or medical supplies within a retort pouch or after autoclave, or articles such as foods and medical supplies which are canned or enclosed in plastic containers (simply referred to as articles hereinafter).

### 2. Description of the Related Art

As heating apparatuses used for sterilization and the like, boiling water circulation type sterilization apparatuses and hot water shower type sterilization apparatuses are already well known to those skilled in the art. However, both types require a large quantity of heat in order to obtain boiling water or hot water necessary for sterilization, which causes problems in respect to energy efficiency.

As apparatuses with no such problems, several steam type pressure heating apparatuses have been already proposed in which heat sterilization is performed using steam under the pressurized condition. However, all the cases have such shortcomings that distributions of steam inside the pressure vessel is unstable, thereby generating cold spots. Therefore, articles to be sterilized are not uniformly heated.

Also, steam inside the pressure vessel is abruptly cooled and condensed when the article inside the pressure vessel is returned to a normal temperature by jetting cooling water after completing the sterilization by pressurizing and heating. As a result, there causes such a problem that damages like ruptures are generated on the outer films of retort pouches or outer films for autoclave due to the drastic decrease in the atmospheric pressure inside the pressure vessel.

Furthermore, in order to uniform the steam distributions inside the pressure vessel, it is necessary for this kind of pressure heating apparatuses to have an air-blow step, that is, an operation for jetting the steam by letting out air from the pressure vessel in the time of starting a sterilization processing. However, it is necessary to supply a large amount of steam inside the pressure vessel in the air - blow step and, since the steam is not sufficiently utilized for heating the article, thermal energy is wasted and the total time required for pressurizing and heating is to be increased. In general, the time required for performing air - blow is about 10 minutes to 20 minutes. The capacity of steam necessary in the step is approximately 50 % of the capacity of the steam used in the whole step including the pressure-heat sterilization.

As techniques for uniforming the steam distributions inside a pressure vessel in a steam type pressure heating apparatus, for example, a apparatus in which a number of fans are provided horizontally in a zigzag arrangement on the inner side of the opposing side walls inside the pressure vessel is disclosed in Japanese Patent Application laid-open Hei 2 - 107173, and Japanese Utility Model Application laid-open Sho 57-37807 discloses a apparatus in which a duct type forced blasting path is formed inside the pressure vessel along the longitudinal direction of the pressure vessel and by driving a fan provided on one end of the forced blasting path, steam and air inside the pressure vessel is to be forcedly agitated. However, in either case, the agitation ability of the fans is not necessarily sufficient and in order to prevent generation of cold spots, it is necessary provide a space in between to place articles to be sterilized. As a result, the storing efficiency is deteriorated.

As a method for preventing damages on the outer films of retort pouches and packages for autoclave due to a drastic decrease in internal pressure inside a pressure vessel by cooling, Japanese Patent Application laid-open Hei 5-161485 discloses a retort sterilization method for preventing damages on the outer films of retort pouches and packages for autoclave by avoiding a decrease in internal pressure through resetting the pressure inside the pressure vessel higher than that of a sterilization processing between the time from the completion of a sterilization processing by applying pressure and heat to the start of cooling.

By applying a pressurizing step as disclosed in Japanese Patent Application laid - open Hei 5 - 161485 to steam type pressure heating apparatuses, a decrease in internal pressure due to an abrupt condensation of steam can be restricted to be within a allowable range through setting the pre-load pressure before the start of cooling considerably high.

However, when this method is applied, the pressure inside the pressure vessel becomes extremely high at the final stage of the sterilization processing. Thus, if it is used for articles such as canned foods to be sterilized, there may be cases where the cans are deformed by the pressure.

Also, due to an abrupt increase in the pressure inside the pressure vessel at the final stage of the sterilization processing, the temperature inside the pressure vessel increases and overshoot the set value. Accordingly, there may cause such a problem that the quality of the articles is deteriorated. Especially, overshoot of the temperature is critical for white source and packages for autoclaves for medical supplies and the like, which are sensitive to excessive temperatures.

One of methods for solving this kind of problems may be to keep the set temperature in the pressurizing and heating step rather low considering the overshoot of the temperature. However, in this case, the productivity is deteriorated by an increase in the pressurizing and heating time required for the sterilization processing.

### SUMMARY OF THE INVENTION

The invention has been designed to overcome the foregoing problems of the related art. An object of the invention is to surely prevent generation of cold spots inside a pressure vessel without using excessive steam and, at the same time, to provide a pressure heating method and apparatus in which time required for pressurizing and heating can be shortened. Also to provide pressure heating method and apparatus for preventing deformation or quality deterioration due to over pressure or over heating.

Present invention is a pressure heating method and apparatus for pressurizing and heating an article by filling a pressure vessel with steam containing a latent heat. In order to achieve the aforementioned object, the method specifically comprises the steps of: pressurizing and heating the article inside the pressure vessel by operating a turbo blower provided outside the pressure vessel on the path of a circulation pipe for connecting a top side opening of the pressure vessel and a bottom side opening of the pressure vessel while circulating the steam from the top side opening towards the bottom side opening along the path of the circulation pipe in a state where the internal pressure of the pressure vessel is increased by supplying steam to the pressure vessel; gradually removing the steam after stopping the supply of the steam and cooling and condensing it inside the circulation pipe through keeping the operation state of the turbo blower while supplying air to the inside of the pressure vessel with pressure within the range not exceeding the maximum value of the internal pressure of the pressure vessel at the time of heating and pressurizing; and cooling the article to be a desired temperature by jetting cooling water to the inside of the pressure vessel.

First, upon supplying the steam to inside of the pressure vessel and driving the turbo blower, air inside the pressure vessel is suctioned from the top side opening of the pressure vessel and strongly agitated with steam inside the circulation pipe. Hence, it is supplied to the inside of the pressure vessel in a state with uniform temperature distributions and steam density from the bottom side opening of the pressure vessel.

Especially, at the early stage of introducing steam, steam and air with a relatively high temperature stagnates in the upper portion inside the pressure vessel whereas fluid with a relatively low temperature stagnates in the lower portion of the pressure vessel. However, by a circulation mechanism comprising the circulation pipe and the turbo blower, the high - temperature steam in the upper portion of the pressure vessel, that is, fluid with a high temperature, which has not consumed the heat for a heat sterilization, is forcedly supplied to the lower portion of the pressure vessel. Therefore, uniformity of the temperature distributions and steam density can be achieved for an extremely short period of time.

As described, generation of cold spots which are partial air faults can be prevented and the atmosphere inside the pressure vessel can be surely uniformed. Hence, it becomes practically unnecessary to perform an air - blow step for letting out air inside the pressure vessel taking a long period of time.

Therefore, pressurizing and heating of articles can be started at the early stage of introducing steam. As a result, unnecessary energy consumption due to the introduction of excessive amount of steam can be prevented in the air - blow step and, at the same time, the pressurizing and heating time required for sterilization of articles can be shortened.

Subsequently, supply of steam is stopped at the point where the sterilization processing by pressurizing and heating is completed and the steam is gradually removed by cooling and condensing it inside the circulation pipe through keeping the operation state of the turbo blower while supplying air to the inside of the pressure vessel with the internal pressure of the pressure vessel set within the range not exceeding the maximum value of the internal pressure at the time of heating and pressurizing.

Since the condensation of the steam by cooling proceeds gradually inside the circulation pipe, gas reduction due to the condensation of the steam proceeds slowly. Thus, by simply supplying air to the inside of the pressure vessel so as to keep the same pressure or less than the internal pressure of the pressure vessel at the time of pressurizing and heating, a decrease in atmospheric pressure can be restricted within the allowable range. Thereby, there is no need to give strong pre-load pressure at the final stage of pressurizing and heating, thereby preventing deformation of articles such as canned foods by an excessive pressure increase beforehand.

Also, the overshoot of the temperature due to application of an excessive pressure is prevented thereby solving such a problem that the quality of articles such as white source and packages for autoclave for medical supplies are deteriorated, which are sensitive to an excessive temperature.

Furthermore, since there is no need to consider about the overshoot of the temperature, it becomes unnecessary to restrict the set temperature rather low in the pressurizing and heating step. Thereby, it becomes possible to achieve the sterilization processing in a short period of time.

At last, articles are cooled to a desired temperature by jetting cooling water to the inside of the pressure vessel. At this point, removal of the steam is completed and the inside of the pressure vessel is filled with air so that a decrease in internal pressure due to the condensation of steam is not an issue.

Moreover, in present invention, wherein steam is condensed inside the circulation pipe by continuously spraying a small amount of cooling water to the inside of the circulation pipe.

Since steam can be removed by such a simple configuration that nozzles are connected to a circulation pipe to spray cooling water, it is advantageous in respect to reducing costs and saving spaces for installing systems. Needless to say, it is possible to apply such a configuration that a cooling condenser is provided on the circulation pipe to cool and condense the steam if there is no concern over costs and spaces for installation.

The pressure heating apparatus of the present invention is a pressure heating apparatus made best suitable for performing the pressure heating method described heretofore. The pressure heating apparatus comprises: a steam supply pipe with an open/close valve for controlling ON/OFF of steam supply to a pressure vessel; a pressurized air supply pipe with an open/close valve for controlling ON/OFF of air supply; a drain unit provided in the bottom portion of the pressure vessel; a circulation pipe for connecting a top side opening of the pressure vessel and the bottom side opening of the pressure vessel outside the pressure vessel; a turbo blower provided on the path of the circulation pipe for circulating fluid inside the pressure vessel from the top side opening towards the bottom side opening; a cooling unit for cooling fluid inside the circulation pipe on the path of the circulation pipe; and a cooling water jet unit for jetting cooling water to the inside of the pressure vessel.

In the configuration described above, upon opening the open/close valve of the steam supply pipe, the steam supplied from the steam supply pipe is introduced to the inside of the pressure vessel via the open/close valve. Then, upon starting the turbo blower, the steam inside the pressure vessel is sanctioned from the top side opening of the pressure vessel and strongly agitated with the steam inside the circulation pipe. It is then supplied to the inside of the pressure vessel from the bottom side opening of the pressure vessel in a state where the temperature distributions and the steam density are uniformed.

Supply of the steam is then stopped by closing the open/close valve of the steam supply pipe after completing the sterilization processing by pressurizing and heating, and air is supplied from the pressurized air supply pipe to the inside of the pressure vessel by opening the open/close valve of the pressurized air supply pipe under the pressure within a range not exceeding the maximum value of the internal pressure of the pressure vessel at the time of pressurizing and heating.

By operating the cooling unit under this condition, the steam flowing inside the circulation pipe is cooled and condensed by the help of the turbo blower to be separated from air. The steam turned to water by being cooled and condensed enters once to the pressure vessel through the circulation pipe and then drained to the outside from the drain unit provided in the bottom portion of the pressure vessel.

Finally, by starting the cooling water jet unit at the point where the removal of the steam is completed, that is, at the point where the fluid inside the pressure vessel is replaced with air, cooling water is jetted to the inside of the pressure vessel and the articles inside the pressure vessel are cooled.

Here, in present invention, wherein the cooling unit comprises a cooling water spray device for continuously spraying a small amount of cooling water to the inside of the circulation pipe.

The cooling water spray device can remove steam with a simple configuration in which a nozzle is connected to the circulation pipe for spraying cooling water. Thus, it is advantageous in respect to reducing the manufacturing costs of the apparatuses and saving spaces for installing the apparatus. Also, it is possible to provide a cooling condenser on the circulation pipe instead of using the cooling water spray device.

Present invention, preferably, further comprising a sequence control system for starting the operation of the cooling water jet unit after supplying steam for a prescribed period of time by driving the turbo blower through opening the open/close valve of the steam supply pipe and then operating the cooling unit for a prescribed period of time through closing the open/close valve of the steam supply pipe and opening the open/close valve of the pressurized air supply pipe.

By applying this configuration, the open/close valve of the steam supply pipe is automatically closed to stop the supply of steam after the completion of the pressurizing and heating processing and, at the same time, the open/close valve of the pressurized air supply pipe is opened to keep atmospheric pressure inside the pressure vessel as same as or slightly less than that in the pressurizing and heating step. Then, the steam inside the circulation pipe is cooled and condensed by the operation of the cooling unit and gradually separated and removed from air to be drained to the outside from the drain unit in the bottom portion of the pressure vessel.

After removing the steam from the pressure vessel by operating the cooling unit for a prescribed period of time, the cooling water jet unit starts automatically to cool the articles inside the pressure vessel.

### BRIEF DESCRIPTION OF THE DRAWINGS

Fig. 1 is a side cross sectional view showing a pressure vessel and a peripheral configuration thereof of pressure heating apparatus according to an embodiment utilizing present invention is applied;
Fig. 2 is a front cross sectional view of the pressure vessel according to the embodiment in Fig. 1;
Fig. 3A is a perspective view showing an example of the configuration of a partition panel to which slits are formed;
Fig. 3B is a perspective view showing an example of the configuration of a partition panel to which holes are formed;
Fig. 3C is a perspective view showing an example of the configuration of a cooling water jet unit;
Fig. 4 is a functional block diagram showing the approximate figure of a sequence control system forming a part of the pressure heating apparatus;
Fig. 5 is a flowchart showing an outline of the processing operation of the sequence control system of Fig. 4;
Fig. 6 is a continued flowchart showing the outline of the processing operation of the sequence control system of Fig. 5; and
Fig. 7 is a timing chart showing changes in the internal temperature and the internal pressure of the pressure vessel and the temperatures of the articles such as retort pouches, autoclaves, and canned foods.

### DETAILED DESCRIPTION OF THE PREFERRED EMBODIMENTS

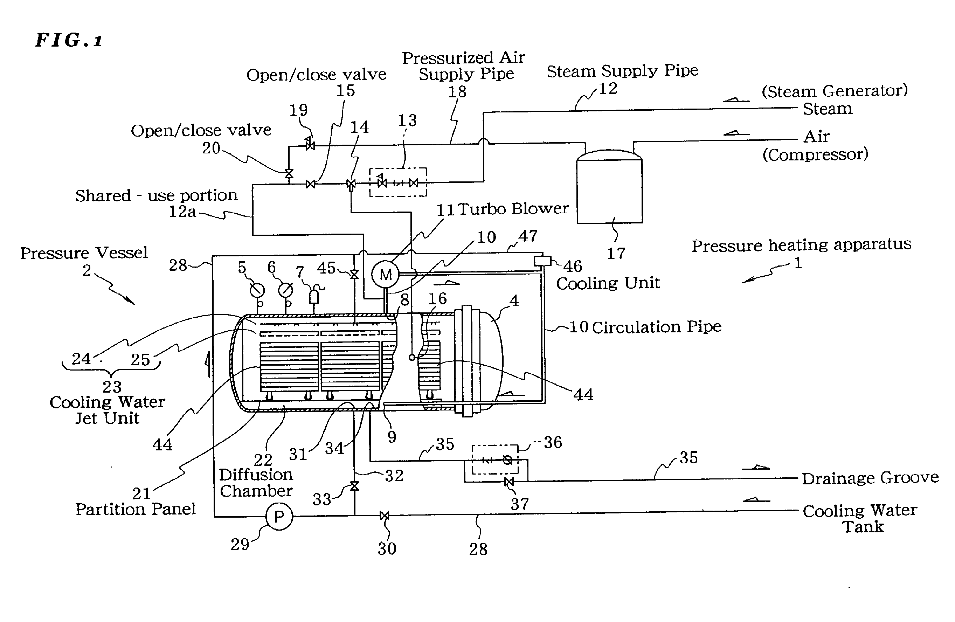

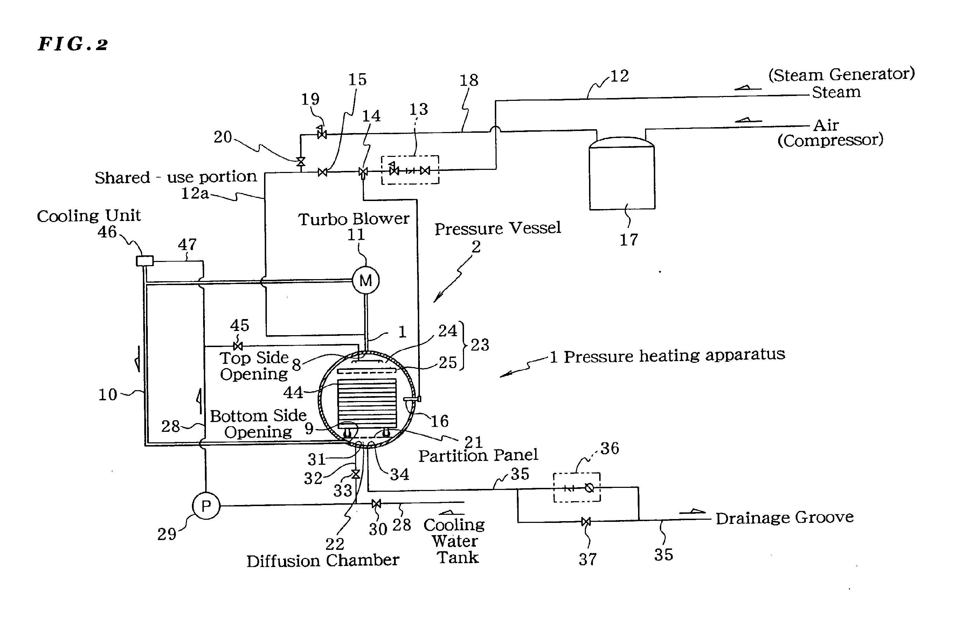

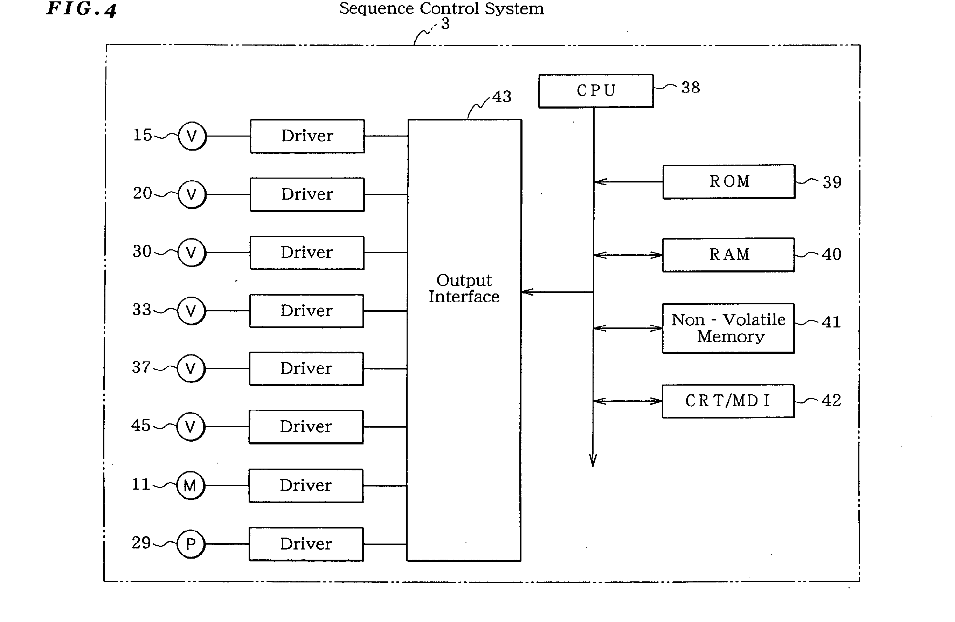

An embodiment of the present invention will be described in detail by referring to accompanying drawings hereinafter. FIG. 1 is a cross sectional view showing a side view of an approximate figure of a pressure vessel 2 and the peripheral configuration thereof in a pressure heating apparatus 1 utilizing pressure heating method according to an embodiment of the present invention and Fig. 2 is a cross sectional view showing a front view of the peripheral configuration of a pressure vessel 2 in the same embodiment. Also, the approximate figure of a sequence control system (sequencer) 3 for controlling each part of the pressure heating apparatus 1 is shown by a functional block diagram in FIG. 4.

The pressure vessel 2 is formed of a substantially cylindrical hollow body as shown in Fig. 1 and Fig. 2, and a pressure - resistant hatch 4 for taking in and out the articles to be sterilized such as retort pouches, package for autoclave, and canned foods or enclosed in plastic containers (simply referred to as articles hereinafter) is provided movable (open and close) on one end. There may be cases where the pressure - resistant hatch 4 is provided on both ends of the pressure vessel 2 depending on the form of production lines.

The pressure vessel 2 is equipped with a manometer 5 and a thermometer 6 for monitoring the internal pressure and temperatures. Also comprised is a safety valve (relief valve) 7 for preventing an abnormal increase in the internal pressure of the pressure vessel 2. All of these are elements well known to those skilled in the art.

Next, the distinct configuration of the pressure heating apparatus 1 according to the embodiment will be described in detail.

As shown in Fig. 1 and Fig. 2, a top side opening 8 is provided on the top face of the pressure vessel 2 while a bottom side opening 9 is provided on the bottom face of the pressure vessel 2. The top side opening 8 and the bottom side opening 9 are connected through a circulation pipe 10 provided outside the pressure vessel 2. Also, a turbo blower 11 is installed on the path of the circulation pipe 10 in the position closer to the top side opening 8. The turbo blower 11 is driven in such a direction that fluid (air and steam) inside the circulation pipe 10 is circulated from the top side opening 8 towards the bottom side opening 9 along the path of the circulation pipe 10.

A steam supply pipe 12 comprises a pressure reducing valve 13, a temperature control valve 14, and an open/close valve 15. The tip of the steam supply pipe 12 is connected to the circulation pipe 10 on the path of the circulation pipe 10 between the turbo blower 11 and the top side opening 8.

The temperature control valve 14 practically comprises a flow control valve, a differential amplifier and the like. The temperature control valve 14 first finds the temperature difference by comparing the steam temperature inside the pressure valve 2 detected by a temperature sensor 16 provided in the pressure vessel 2 and the target temperature set beforehand in the differential amplifier and the like, and then automatically controls the flow of steam supplied to the pressure vessel 2 by performing proportional control of the opening state of the flow control valve so that the temperature difference is reduced, so as to finally adjust the steam temperature inside the pressure vessel 2. In other words, if the temperature detected by the temperature sensor 16 is lower than the target temperature, the flow control valve is adjusted to be the open side in proportion to the temperature difference and, if the temperature detected by the temperature sensor 16 is higher than the target temperature, the flow control valve is adjusted to be the closing side in proportion to the temperature difference.

A pressurized air supply pipe 18 for introducing the pressurized air supplied from a pressurized air tank 17 to the pressure vessel 2 comprises a pressure reducing valve 19 for restricting air pressure and the open/close valve 20, and the tip is connected to the steam supply pipe 12 in the slightly down stream position than the open/close valve 15 of the steam supply pipe 12.

The allowable pressure of the pressure reducing valve 19 on the pressurized air supply pipe 18 is set as same as or slightly less than that of the pressure reducing valve 13 on the steam supply pipe 12.

The section of the steam supply pipe 12 between the open/close valve 15 and the connection point to the circulation pipe 10 becomes a shared-use portion 12a serving as both the steam supply pipe 12 and the pressurized air supply pipe 18. An open/close valve 20 of the pressurized air supply valve 18 is provided in the upper stream side than the shared - use portion 12a. As described, by providing the steam supply pipe 12 and the pressurized air supply pipe 18 together by a single line near the pressure vessel 2, the piping structure in the periphery of the pressure vessel 2 can be simplified.

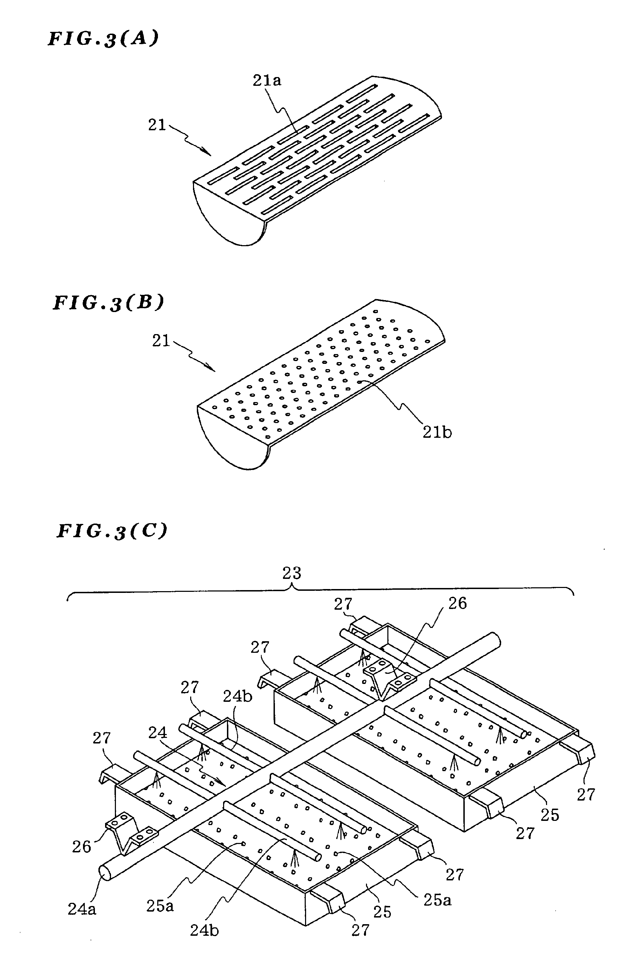

Inside the pressure vessel 2, a partition panel 21 having a number of slits or holes with prescribed intervals is fixed apart from the bottom of the pressure vessel 2 and a diffusion chamber 22 is formed between the partition panel 21 and the bottom of the pressure vessel 2. Examples of the configuration of the partition panel 21 are shown in Fig. 3A and Fig. 3B.

Fig. 3A shows an example where the partition panel 21 is provided by forming a number of slits 21a on a metal plate and Fig. 3B shows an example where the partition panel 21 is provided by forming number of holes 21b on a metal plate. In both cases, the area ratio of the opening portion of the silts 21a or the holes 21b against to cross section area of partition panel 21 is about 60 % in the direction perpendicular to the longitudinal direction of diffusion chamber 22.

The main part of a cooling water jet unit 23 for jetting cooling water to inside of the pressure vessel 2, as shown in Fig. 1 and Fig. 2, comprises a shower cooling pipe 24 fixed by being hung on the top face of the pressure vessel 2 and a cooling water dispersion plate 25 fixed under the shower cooling pipe 24 with prescribed intervals. An example of the configuration of the shower cooling pipe 24 and the cooling water dispersion plate 25 is shown in Fig. 3C.

The shower cooling pipe 24 comprises a main pipe 24a and a plurality of sub pipes 24b fixed orthogonal to the main pipe 24a. Cooling water introduced from the main pipe 24a through the sub pipes 24b is to be jetted like shower from nozzles (not shown) on both sides of the sub pipes 24b. The shower cooling pipe 24 is installed inside the top face of the pressure vessel 2 via a stay 26.

The cooling water dispersion plate 25 is formed by a rectangular plate with a number of holes 25a being provided on the bottom face, and cooling water jetted from the shower cooling pipe 24 is temporarily pooled therein. The pooled cooling water is dropped uniformly from a number of the holes 25a. The cooling water dispersion plate 25 is installed in the position under the shower cooling pipe 24 by fixing a stay 27 to the inner wall of the pressure vessel 2.

As shown in Fig. 1 and Fig. 2, a cooling water supply pipe 28 is connected to the shower cooling pipe 24 via an open/close valve 45. The cooling water pooled in a cooling water tank (not shown) is to be supplied to the shower cooling pipe 24 via an open/close valve 30 and a cooling water pump 29.

Also, a sub supply pipe 47 for the spray device is connected to the cooling water supply pipe 28 in the upper stream side than the open/close valve 45 so that, by the opening-closing operation of the open/close valve 45, cooling water can be supplied to a cooling water spray device 46 as a cooling unit installed on the circulation pipe 10 via the sub supply pipe 47 for the spray device. The cooling water spray device 46 has a simple configuration in which a nozzle is connected to the outside the bend of the path of the circulation pipe 10.

The sub supply pipe 47 for the spray device is formed thinner than the cooling water supply pipe 28. Therefore, the cooling water is forcedly supplied to the sub supply pipe 47 for the spray device when operating the cooling water pump 29 by closing the open/close valve 45. However, when operating the cooling water pump 29 by opening the open/close valve 45, most of the cooling water flows to the shower cooling pipe 24 side via the open/close valve 45, thereby hardly flowing to the cooling water spray device 46 side.

On the path of the cooling water supply pipe 28 between the cooling water pump 29 and the open/close valve 30, a cooling water recovery pipe 32 which connects to a cooling water recovery hole 31 provided in the bottom face of the pressure vessel 2 is connected via an open/close valve 33. Also, a drain hole 34 as a part of an water drain unit is provided in the bottom face of the pressure vessel 2 in parallel to the cooling water recovery hole 31. On the path of a drain pipe 35 connected to the drain hole 34, an auto drain 36 as a main part of an water drain unit and an open/close valve 37 are placed in parallel to each other. The auto drain 36 is a valve for detecting water generated by condensation of steam and the like and for draining it automatically. Detailed description of the configuration and function is omitted since the auto drain 36 is well known to those skilled in the art.

In Fig. 1 and Fig. 2, numeral 44 denotes a truck for loading articles such as retort pouches, package for autoclave, and canned foods or plastic container at once to the pressure vessel 2. In the truck 44, there are several shelves for placing the articles to be sterilized being provided in the vertical direction at prescribed intervals. In each shelf, a number of slits or holes are formed as in the same manner as that of the partition panel 21.

A sequence control system 3 for controlling each part of a pressure heating apparatus 1, as in the approximate figure shown in Fig. 4, comprises a CPU 38 for arithmetic processing, a ROM 39 for storing a control program, a RAM 40 used for temporarily storing arithmetic data, a non-volatile memory (or a hard disk) 41, a manual data input device 42 with display unit and an output interface 43. The electromagnetic relay type open/close valves 15, 20, 30, 33, 37, the turbo blower 11 and the cooling water pump 29 are connected to the output interface 43 to be capable of drive control.

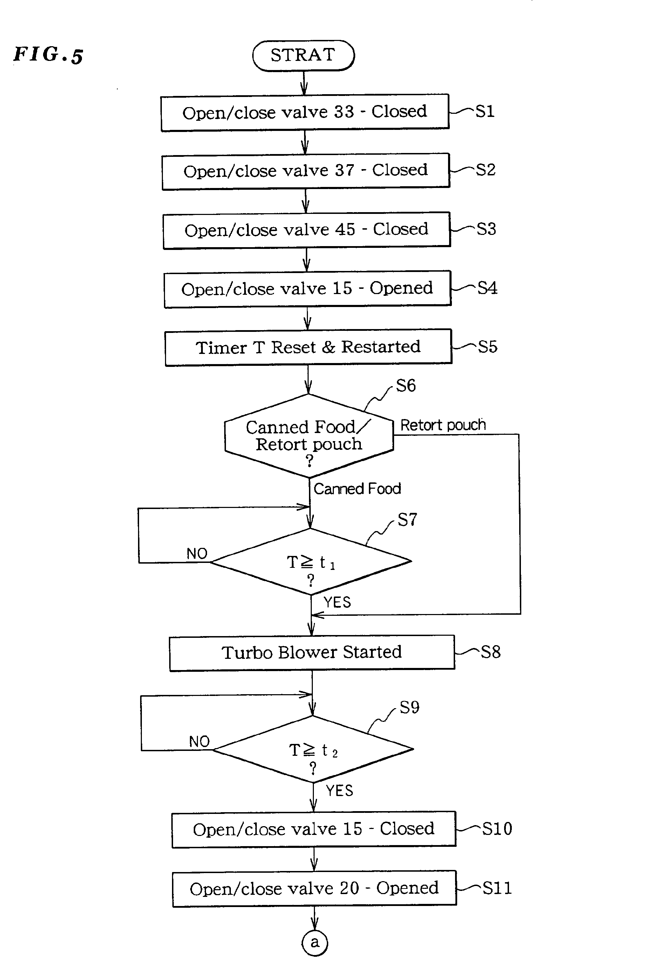

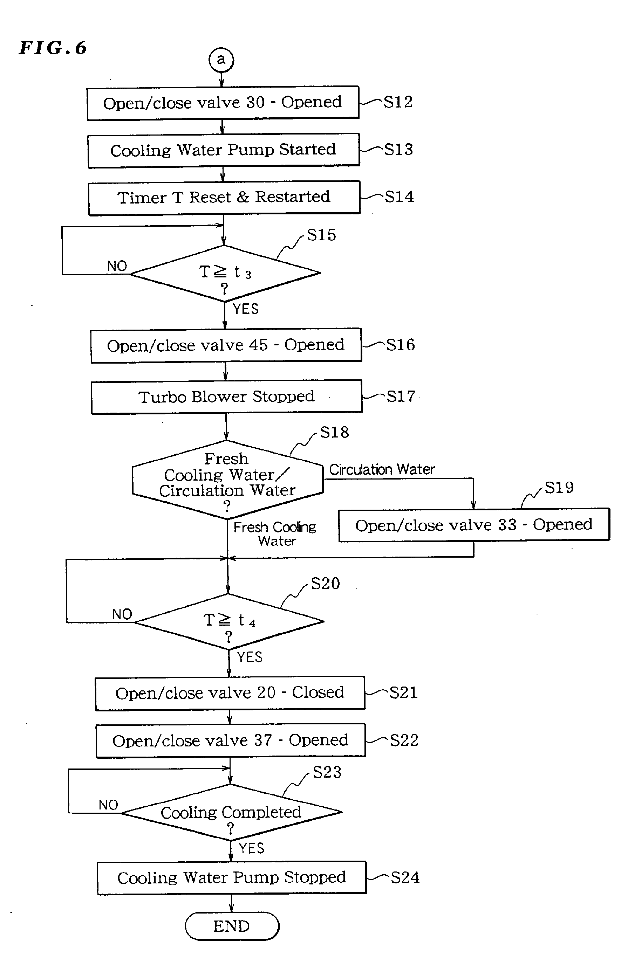

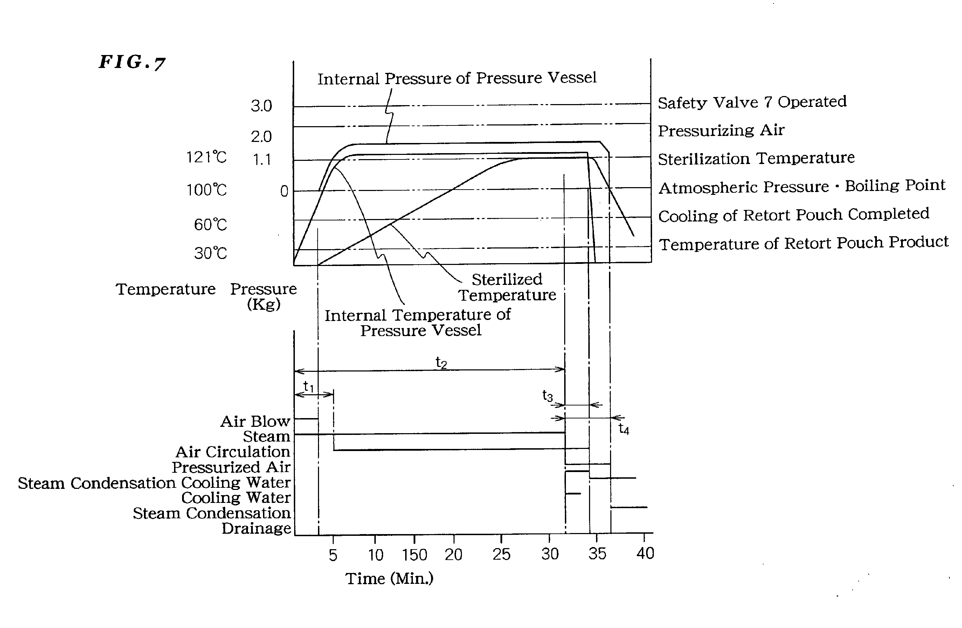

Next, the total operation of the pressure heating apparatus 1 according to the embodiment will be described by referring to flowcharts in Fig. 5 and Fig. 6 showing the approximate figure of the processing operation of the sequence control system 3 for controlling each part of the pressure heating apparatus 1, and a timing chart in Fig. 7 showing changes in the internal temperature and the internal pressure of the pressure vessel 2 and changes in the temperatures of the articles such as retort pouches, package for autoclave, and canned foods.

At this stage, the articles to be sterilized are already loaded inside the pressure vessel 2 and operation of a compressor for supplying air to the pressurized air tank 17 and a steam generator is started. Also, manual setting of pressure for the pressure reducing valves 13 and 19, and setting of the target value for the temperature control valve 14 are to be completed. As described above, allowable pressure set to the open/close valve 19 is almost same to or slightly lower than that of the open/close valve 13. The open/close valves 15, 20, 30 are at the initial state in the closed position and the turbo blower 11 and the cooling water pump 29 are at the initial state being stopped. However, it is possible that the open/close valve 37 is left opened due to the draining performed at the final stage of the pressurizing and heating. Also, the open/close valve 33 may be left opened in the case where cooling is performed by reusing the cooling water which has been already used at the cooling step of pressurizing and heating. Since the open/close valve 45 is opened at cooling step in order to operate the cooling water jet unit 23, usually, the open/close valve 45 keep an open state at the starting time of next use.

The sequence control system 3 upon starting the sequence control, first, outputs a closing command to the open/close valve 33, the open/close valve 37 and the open/close valve 45 via the output interface 43 and a driver, and controls both valves to be in the closed position (step s1, step s2, step s3). The reason is that, as described above, the valves may be left open in the state at the time of completing the preceding operation of pressurizing and heating.

Subsequently, the sequence control system 3 introduces steam from the steam generator inside the circulation pipe 10 via the steam supply pipe 12, the pressure reducing valve 13, the temperature control valve 14, the open/close valve 15 and the shared-use portion 12a of the steam supply valve pipe 12 by outputting an opening command to the open/close valve 15 via the output interface 43 and the driver to open the open/close valve 15 (step s4). At the same time, the sequence control system 3 starts measurement of the time passed since the start of supplying the steam by resetting or restarting the timer (step s5) and judges whether the sterilization mode of the apparatus is set for canned foods or retort pouches (step s6).

The sterilization mode is set by the input operation by the manual data input device with display unit 42. However, at this point, one of either the modes for canned foods or retort pouches is selected and the selected result is stored in the nonvolatile memory 41.

As has been already mentioned, it is not necessary to have an air - blow step in the pressure heating apparatus 1 according to the embodiment. However, it is possible to perform an air - blow step for filling the pressure vessel 2 with steam at the first stage of the pressurizing and heating processing by setting the sterilization mode for canned food.

When it is judged by the judging processing in the step s6 that the sterilization mode is set for canned foods, the sequence control system 3 waits till the measurement time T of a timer for measuring the time passed from the time of starting steam supply reaches the required air - blow time t1 (the value set shorter than the required time of the related art) and during this time, steam supplied from the circulation pipe 10 fills inside the pressure vessel 2 via the top side opening 8 (step s7).

When it is judged by the judging processing in the step s6 that the sterilization mode is set for retort pouches, there is no need for performing an air - blow step. Thus, the sequence control system 3 skips the waiting processing in the step s7 and controls the turbo blower 11 to start the operation immediately (step s8).

At this time, the maximum pressure of the steam supplied to the pressure vessel 2 is limited by the pressure reducing valve 13, and within the range, the temperature control valve 14 controls the flow amount of the steam based on the correlation of temperature information from the temperature sensor 16 and the target temperature. Thereby the steam temperature inside the pressure vessel 2 is adjusted.

The internal temperature and internal pressure of the pressure vessel 2, as shown in Fig. 7, start to increase gradually, and slightly after this, temperatures of the articles to be sterilized, that is, the retort pouches, the packages for autoclave, canned foods or plastic container start to increase. Fig. 7 shows the case of performing an air-blow. In other words, it shows an example of an increase in the internal temperature in the case where the operation of the turbo blower 11 is started after the required air-blow time t1 has passed from the time of starting steam supply. The required air-blow time t1 is to be set with some extra time to an extent for the required time for filling the steam (3 minutes in the example shown in Fig. 7). Therefore, as shown in Fig. 7, the actual required time for filling becomes shorter than the required air -blow time t1, which is the waiting time before starting the operation of the turbo blower 11.

Subsequently, supply of the steam to the pressure vessel 2 and rotation of the turbo blower 11 are performed continuously for the prescribed pressurized and heating time t2 (set value) .

By the operation of the turbo blower 11, air inside the pressure vessel 2 and steam supplied via the steam supply pipe 12 are strongly agitated inside the circulation pipe 10. Therefore, the temperature distributions and steam density of the mixed fluid of air and steam supplied from the circulation pipe 10 to the diffusion chamber 22 via the bottom side opening 9 of the pressure vessel 2 are in a state which is extremely close to be uniform.

The mixed fluid of air and steam supplied to the diffusion chamber 22 as described is uniformly jetted from each part of the partition panel 21 through the slits 21a or the holes 21b of the partition panel 21 and rises from bottom to top inside the pressure vessel 2. During the process, the articles such as retort pouches, package for autoclaves, or canned foods placed on a plurality of shelves of the truck 44 are heated and sterilized.

Slits and holes like those of the partition panel 21 are formed on the shelves of the truck 44 so that there is no interruption of rise of the mixed flow by the shelves. Thus, the articles such as retort pouches, packages for autoclave, canned foods or plastic container placed in each shelf are uniformly heated and sterilized by stable steam without cold spots. Also, the pressure vessel 2 is a perfect sealed vessel and the inside is pressurized by steam containing latent heat. Therefore, heat sterilization can be performed at far higher temperatures than the boiling point of water under the standard atmospheric pressure. The articles such as retort pouches, package for autoclaves canned foods or plastic container placed on the shelves are also pressurized by steam so that there is no risk that the outer films (wrapping) of the retort pouches or autoclaves are deformed or ruptured.

Especially, at the initial stage of introducing steam, the fluid of steam and air with relatively high temperatures stays in the upper portion of the pressure vessel 2 while the fluid of steam and air with relatively low temperature stays in the lower portion of the pressure vessel 2. However, the fluid with high temperature in the upper portion is forcedly transferred to the lower portion of the pressure vessel 2 by the circulation mechanism formed with the circulation pipe 10 and the turbo blower 11. Thus, it becomes possible to achieve uniformity of the temperature distributions and steam density for an extremely short period of time.

As a result, the air - blow time is shortened to 5 minutes or shorter, which otherwise requires about 10 to 20 minutes in the related art. Also, the air-blow time performed without the operation of the turbo blower 11 is shortened. Thereby, unnecessary consumption of energy due to introduction of excessive amount of steam at the air - blow step can be prevented and, at the same time, pressurizing and heating time required for the sterilization of the articles can be shortened.

Water generated by normal condensation of steam during the heat sterilization as described flows to the auto drain 36 via drain hole 34 as the water drain unit and drain pipe 35 provided on the bottom face of the pressure vessel 2 and automatically drained to the drainage groove near the place where the apparatus is located.

When it is detected by the judging processing in the step s9 that the prescribed pressurizing and heating time t2 (set value) has passed, the sequence control system 3 outputs a closing command to the open/close valve 15 to stop the supply of steam while keeping the rotation of the turbo blower 11 and stops the supply of steam to complete the steps of the heat sterilization (step s10). At the same time, the sequence control system 3, by outputting an opening command to the open/close valve 20 to open the opening valve 20, introduces the pressurized air from the pressurized air tank 17 to the inside of the circulation pipe 10 via the pressurized air supply pipe 18, the pressure reducing valve 19, the open/close valve 20, and also the shared-use portion 12a of the steam supply pipe 12 which practically functions as the pressurized air supply pipe (step s11).

Therefore, even after the steam supply is stopped, the internal pressure of the pressure vessel 2 can be maintained to be the same as or slightly less than that in the steps of the heat sterilization.

Subsequently, the sequence control system 3 allows the cooling water pump 29 to operate for pumping of cooling water by outputting an opening command to the open/close valve 30 to open the opening valve 30 (step s12). Then cooling water is pumped up from the cooling water tank via the cooling water supply pipe 28 and the open/close valve 30 by outputting a drive command to the cooling water pump 29 and then starts to supply the cooling water for steam condensation to the cooling water spray device 46 via the sub supply pipe 47 for the spray device connected to the cooling water pipe 28 (step s13). At the same time, the sequence control system 3 starts the measurement of the operation time of the cooling water spray device 46 by resetting or restarting the timer (step s14).

At this time, the open/close valve 45 is being closed so that there is no way that cooling water flows into the cooling water jet unit 23 side. Also, the diameter of the sub supply pipe 47 for the spray device is formed smaller than that of the cooling water supply pipe 28 and the cooling water spray device 46 is connected to the bend of the circulation pipe 10 via a thin nozzle. Hence, the amount of cooling water for steam condensation sprayed to the inside of the circulation pipe 10 per unit time from the cooling water spray device 46 becomes extremely small.

At this point, the operation of the turbo blower 11 is still continued so that the steam inside the pressure vessel 2 circulates in the circulation pipe 10 with strong force. By supplying the cooling water for steam condensation from the thin nozzle of the cooling water spray device 46, the cooling water for steam condensation turns to be a mist inside the circulation pipe 10 to be dispersed. Then, the steam flowing inside the circulation pipe 10 is forcedly cooled and condensed by the misty cooling water for steam condensation and liquidized to be water as if it is adsorbed to the cooling water for steam condensation.

Water generated as described enters once to the inside of the pressure vessel 2 via the circulation pipe 10 and the bottom side opening 9. Then, it flows to the auto drain 36 via the drain hole 34 and the drain pipe 35 which are the drain unit provided in the bottom face of the pressure vessel 2, and automatically drained to the drain groove near the place where the apparatus is installed.

The volume of the whole steam is contracted by the forced condensation of portion of the steam inside the circulation pipe 10. However, the progress rate of the condensation inside the circulation pipe 10 as described is extremely slow compared to the case where the cooling water is directly jetted to the inside of the pressure vessel 2. Thus, it is possible to sufficiently fill up the pressure decrease by the pressurized air supplied from the pressurized air tank 17 so that there is no substantial decrease in the internal pressure inside the pressure vessel 2.

As a result, damages of articles due to the abrupt decrease in the pressure, specifically, ruptures and the like of the outer films of retort pouches and packages for autoclave can be surely prevented.

In addition, unlike the related art (for example, Japanese Patent Application laid - open Hei 5 - 161485) in which the pressure decrease caused by the abrupt condensation of steam in the cooling step is prevented by notably increasing the internal pressure of the pressure vessel at the final stage of pressurizing and heating, it is not necessary with the apparatus of the present invention to highly pre-load the pressure vessel at the final stage of pressurizing and heating. Thus, deformation of the articles such as canned foods due to the excessive pressure increase can be prevented beforehand and the overshoot of the temperature due to supplying an excessive pressure can be also prevented. Therefore, there is no need to concern about the deterioration of the product qualities such as white source or packages for autoclaves for medical supplies which are sensitive to the excessive temperatures. At the same time, it is unnecessary to provide the set temperature rather low in the pressurizing and heating step for avoiding the overshoot of the temperatures so that the sterilization processing can be achieved in a short period of time.

When the operation time of the cooling water spray device 46 reaches the prescribed set time t3 and it is detected by the judging processing in the step s15 that most of the steam inside the pressure vessel 2 is condensed and removed, the sequence control system 3 changes the destination from the cooling water spray device 46 to the cooling water jet unit 23 by outputting a closing command to the open/close valve 45 to open the open/close valve 45 (step s16), and stops the operation of the turbo blower 11(step s17).

The operation time t3 of the cooling water spray device 46 is to be set with a margin so that removal of the steam inside the pressure vessel 2 is completely executed before the start of jetting the cooling water. Therefore, as shown in Fig. 7, the actual condensation of the steam (steam condensation) is completed before stopping the rotation of the turbo blower 11 and the operation of the cooling water spray device 46.

In the embodiment, no specific open/close valve is provided on the sub supply pipe 47 for the spray device. However, as mentioned earlier, the diameter of the sub supply pipe 47 for the spray device is formed smaller than that of the cooling water supply pipe 28 and, at the same time, it is connected to the bend of the circulation pipe 10 via a thin nozzle. Therefore, the cooling water supplied from the cooling water pump 29 hardly flows to the sub supply pipe for 47 fore the spray device. Needless to say, instead of using the open/close valve 45, a three - way valve may be provided for strictly changing the destination of the cooling water supplied from the cooling water pump 29 between the cooling water spray device 46 and the cooling water jet unit 23.

Next, the sequence control system 3 judges whether the cooling water supply mode of the apparatus is set for fresh cooling water or circulation cooling water (step s18).

The cooling water supply mode is set by the input operation by the manual data input apparatus with display unit 42. However, at this point, one of either modes for fresh cooling water or circulation cooling water is selected and the selected result is stored in the nonvolatile memory 41.

When it is judged by the judging processing in the step s18 that it is set for the circulation cooling water mode, the sequence control system 3 outputs the opening command to the open/close valve 33 to open the open/close valve 33 thereby allowing the cooling water pooled inside the pressure vessel 2 to be re - supplied to the cooling water pump 29 via the cooling water recovery pipe 32 (step s19). On the other hand, when it is judged that it is set for the fresh cooling water mode, the sequence control system 3 keeps the closing state of the open/close valve 33 as it is and prevents the cooling water pooled inside the pressure vessel 2 from entering to the cooling water pump 29 via the cooling water recovery pipe 32.

Therefore, when it is set for the circulation cooling water mode, that is, when the open/close valve 33 is opened, the cooling water from the cooling water tank and the used cooling water recovered from the cooling water recovery pipe 32 are mixed to be fed to the cooling water pump 29. On the contrary, when it is set for the fresh cooling water mode, that is, when the open/close valve 33 is closed, only the cooling water from the cooling tank is to be fed to the cooling water pump 29.

The operation of the cooling water jet unit 23 is started upon receiving the supply of cooling water, thereby jetting the cooling water to retort pouches, packages for autoclaves, canned foods, plastic containers or the like to start cooling of the articles. At this point, the steam inside the pressure vessel 2 has already been completed and is replaced with air. Thus, there is no decrease in atmospheric pressure due to the condensation of steam. As a result, there is no need to concern about ruptures and the like in the outer films of retort pouches and packages for autoclaves.

Therefore, upon confirming by the judging processing in the step s20 that the pressurizing time t4 has passed, the sequence control system 3 outputs a closing command to the open/close valve 20 to stop supply of pressurized air to the pressure vessel 2 (step s21). At the same time, the sequence control system 3 starts processing of draining the cooling water inside the pressure vessel 2 via the drain hole 34, the drain pipe 35 and the open/close valve 37 by outputting an opening command to the open/close valve 37 to open the open/close valve 37 (step s22).

During this time, the cooling water pump 29 is still continuously driven and the cooling water is jetted from the shower cooling pipe 24 as the cooling water jet unit. The turbo blower 11 is installed on the path of the circulation pipe 10 in the position closer to the top side opening 8. Therefore, there is no need to concern about the damages on the turbo blower 11 even if the cooling water enters the circulation pipe 10.

Finally, when it is judged by the judging processing in a step s23 that the amount of jetted water from the shower cooling pipe 24 has reached the set value and the constant amount flowing signal from the water level sensor provided in the cooling water tank is detected indicating the completion of cooling the articles, the sequence control system 3 finishes the processing of the cooling step by stopping the operation of the cooling water pump 29 (step s24).

As shown in Fig. 7, the open/close valve 37 is kept in the opened state as it is, and the cooling water pooled in the pressure vessel 2 is completely drained to the last drop via the drain hole 34, the drain pipe 35, and the open/close valve 37.

The operation of the sequence control system 3 has been described by referring to an example in which: after opening the switch valve 15 of the steam supply pipe 12 and starting the turbo blower 11, pressurizing and heating processing is performed by keeping the open state of the open/close valve 15 for a prescribed period of time; the pressurizing and heating processing is completed by closing the open/close valve 15 of the steam supply pipe 12; the cooling water spray device 46 as the cooling unit is operated for a prescribed period of time in a state with the same or slightly less pressure than that of the pressurizing and heating by opening the open/close valve 20 of the pressurized air supply pipe 18 so as to gradually condense the steam inside the pressure vessel 2 and replace it with air; and then the operation of the shower cooling pipe 24 as the cooling water jet unit is started. If necessary, it is possible for users to change the set values of the required air - blow time t1, the pressurizing and heating time t2, the pressurizing waiting time t3, the pressurizing time t4 and the like at will by the setting operation of the manual data input apparatus with display unit 42.

Also, the sequence control regarding the drive control of the each part of the pressure vessel 2 can be freely designed as long as the steam inside the pressure vessel 2 is surely replaced with air by gradually condensing the steam inside the pressure vessel 2 through operating the cooling water spray device 46 in a state where the pressure is restricted to be the same or slightly less than that of the pressurizing and heating step.

As the cooling unit for gradually condensing the steam inside the pressure vessel 2, it is possible to use a cooling condenser of the related art which are well known to those skilled in the art by providing it on the circulation pipe 10.

The pressure heating method and apparatus according to the present invention is formed to comprise a circulation pipe outside the pressure vessel for connecting a top side opening provided on the upper portion of the pressure vessel and a bottom side opening provided on the lower portion of the pressure vessel and a turbo blower to which a steam supply pipe is connected is provided on a path of the circulation pipe so as to forcedly circulate the fluid inside the pressure vessel. Therefore, the air and the steam inside the pressure vessel can be strongly agitated so that uniformity of the temperature distributions and the steam density can be achieved.

Thus, it becomes possible to achieve uniformity of the temperature distributions and the steam density for an extremely short period of time and generation of cold spots which are partial air faults can be prevented. As a result, the atmosphere inside the pressure vessel can be surely uniformed so that it becomes practically unnecessary to have an air - blow step for letting out the air inside the pressure vessel taking a long period of time.

Consequently, the articles can be pressurized and heated at the initial stage of starting introduction of the steam. Thereby, unnecessary consumption of energy by introducing excessive amount of steam in the air - blow step can be prevented and, at the same time, the pressurizing and heating time required for sterilization of the articles can be shortened.

In addition, supply of the steam is stopped at the point of completing the sterilization processing by pressurizing and heating, and the steam is to be gradually removed by cooling and condensing it inside the circulation pipe through keeping the operation state of the turbo blower while supplying air to the inside of the pressure vessel with the internal pressure of the pressure vessel set within the range not exceeding the maximum value of the internal pressure at the time of heating and pressurizing. Thus, gas reduction due to the condensation of the steam proceeds slowly. Therefore, by simply supplying air to the inside of the pressure vessel under the same or less pressure than the internal pressure of the pressure vessel at the time of pressurizing and heating, a decrease in atmospheric pressure can be restricted within the allowable range. Thereby, there is no need to highly preload the pressure vessel at the final stage of pressurizing and heating, thereby preventing deformation of articles such as canned foods beforehand due to an excessive pressure increase beforehand.

Also, the overshoot of the temperature due to application of excessive pressure is prevented thereby solving such a problem that the quality of articles such as white source and packages for autoclaves for medical supplies are deteriorated ,which are sensitive to an excessive temperature.

Furthermore, since there is no need to consider about the overshoot of the temperature, it becomes unnecessary to restrict the set temperature rather low in the pressurizing and heating step. Thereby, it becomes possible to achieve the sterilization processing in a short period of time.

Furthermore, as the cooling unit for cooling and condensing the steam inside the circulation pipe, provided is a cooling water spray device for continuously spraying a small amount of cooling water to the inside of the circulation pipe. Thus, steam can be removed with a simple configuration. Therefore, the invention is advantageous in respect to reducing manufacturing costs of the apparatus and saving the spaces for placing the apparatus.

Moreover, by providing the sequence control system, the cooling unit is operated for a prescribed period of time by closing the open/close valve of the steam supply pipe and opening the open/close valve of the pressurized air supply pipe and then the operation of the cooling water jet unit is started after driving the turbo blower by opening the open/close valve of the steam supply pipe to supply steam for a prescribed period of time. As a result, the steps from sterilization to cooling using a pressure heating apparatus can be totally automated.

The invention may be embodied in other specific forms without departing from the spirit or essential characteristic thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

The entire disclosure of Japanese Patent Application No. 2001-262733 (Filed on August 31, 2001) including specification, claims, drawings and summary are incorporated herein by reference in its entirety.

## Claims

1. A pressure heating method for pressurizing and heating an article by filling a pressure vessel with steam containing latent heat, comprising the steps of:
pressurizing and heating the article inside the pressure vessel by operating a turbo blower provided outside the pressure vessel on the path of a circulation pipe for connecting a top side opening of the pressure vessel and a bottom side opening of the pressure vessel while circulating the steam from the top side opening towards the bottom side opening along the path of the circulation pipe in a state where the internal pressure of the pressure vessel is increased by supplying steam to the pressure vessel;
gradually removing the steam after stopping the supply of the steam and cooling and condensing it inside the circulation pipe through keeping the operation state of the turbo blower while supplying air to the inside of the pressure vessel with pressure within the range not exceeding the maximum value of the internal pressure of the pressure vessel at the time of heating and pressurizing; and
cooling the article to be a desired temperature by jetting cooling water to the inside of the pressure vessel.

2. The pressure heating method as claimed in claim 1, wherein steam is condensed inside the circulation pipe by continuously spraying a small amount of cooling water to the inside of the circulation pipe.

3. A pressure heating apparatus for pressurizing and heating an article by filling a pressure vessel with steam containing latent heat, comprising:
a steam supply pipe with an open/close valve being connected to the pressure vessel; a pressurized air supply pipe with an open/close valve being connected to the pressure vessel; a drain unit provided in the bottom portion of the pressure vessel; a circulation pipe for connecting a top side opening of the pressure vessel and the bottom side opening of the pressure vessel outside the pressure vessel; a turbo blower provided on the path of the circulation pipe for circulating fluid inside the pressure vessel from the top side opening towards the bottom side opening along the path; a cooling unit for cooling fluid inside the circulation pipe on the path of the circulation pipe; and a cooling water jet unit for jetting cooling water to the inside of the pressure vessel.

4. The pressure heating apparatus as claimed in claim 3, wherein the cooling unit comprises a cooling water spray device for continuously spraying a small- amount of cooling water to the inside of the circulation pipe.

5. The pressure heating apparatus as claimed in claim 3, further comprising a sequence control system for starting the operation of the cooling water jet unit after supplying steam for a prescribed period of time by driving the turbo blower through opening the open/close valve of the steam supply pipe and then operating the cooling unit for a prescribed period of time through closing the open/close valve of the steam supply pipe and opening the open/close valve of the pressurized air supply pipe.

6. The pressure heating apparatus as claimed in claim 4, further comprising a sequence control system for starting the operation of the cooling water jet unit after supplying steam for a prescribed period of time by driving the turbo blower through opening the open/close valve of the steam supply pipe and then operating the cooling unit for a prescribed period of time through closing the open/close valve of the steam supply pipe and opening the open/close valve of the pressurized air supply pipe.
